# EUROPÄISCHE PATENTSCHRIFT

(11) **EP 1 790 675 B1**
(45) Veröffentlichungstag und Bekanntmachung des Hinweises auf die Patenterteilung: **13.09.2017**
(21) Anmeldenummer: 06123773.1
(22) Anmeldetag: 09.11.2006
(51) Int. Cl.: C08G 18/42, A43B 13/04, A43B 23/08

(54) **Zwischensohlen für Sicherheitsschuhe aus niederdichtem Polyurethanschaumstoff**
Midsole for safety footwear from low density polyurethan foam
Semelle intermédiaire pour chaussures de sécurité en polyuréthane basse densité

(30) Priorität: 25.11.2005 IT MI20052257
(43) Veröffentlichungstag der Anmeldung: 30.05.2007
(73) Patentinhaber: BASF SE, 67056 Ludwigshafen am Rhein (DE)
(72) Erfinder: Ortalda, Marco, 10137 Torino (IT); Spitilli, Tony, 10147 Torino (IT); Celli, Gianluca, 10139 Torino (IT); Wankerl, Maximilian, 10132 Turin (IT)
(74) Vertreter: BASF IP Association

(56) Entgegenhaltungen:
- EP-A- 0 821 019
- EP-A1- 0 745 626
- EP-A1- 1 541 606
- EP-A2- 0 463 479
- EP-A2- 1 505 082
- WO-A-2005/116101
- DE-A1- 4 406 219
- GB-A- 1 192 863
- IT-A1- MI20 041 096

## Beschreibung

GB 1 192 863 A offenbart eine Zwischensohle für Sicherheitsschuhe verankert mit einer Stahlkappe

Die Erfindung betrifft Zwischensohlen für Sicherheitsschuhe aus Polyurethanschaumstoff mit einer Dichte von 250 Gramm pro Liter (nachfolgend als g/L bezeichnet) bis weniger als 500 g/L, erhältlich durch Umsetzung von Polyisocyanaten (a) mit einer Polyolkomponente (b), enthaltend die Bestandteile Polyesterol (b-1) und Polymerpolyesterol (b-2), wobei der Anteil an Polymerpolyesterolen (b-2) mehr als 5 bis weniger als 50 Gew.-%, bezogen auf das Gesamtgewicht der Komponente (b) beträgt, und gegebenenfalls Kettenverlängerungsmittel (c), in Gegenwart von Wasser (d) als Treibmittel und antistatischen Substanzen (e), wobei in der Zwischensohle eine Stahlkappe verankert ist.

Die Herstellung von Schuhsohlen aus mikrozellulären PUR-Elastomeren mit Formteildichten oberhalb von 400 g/L ist im Stand der Technik bekannt und beispielsweise in EP-A-463479 beschrieben. Schuhsohlen sowie andere Dämpfungselemente für den Schuhsektor mit niedrigeren Dichten können grundsätzlich durch Erhöhung des Anteils an physikalischem und/oder chemischen Treibmittel erhalten werden. Aufgrund gesetzlicher Vorlagen (Montreal-Protokoll) wurde dabei in den letzten Jahren rein mit Wasser getriebenen Systemen der Vorzug gegenüber früher üblichen, mit physikalischen Treibmitteln erhaltenen Systemen gegeben.

Beispielsweise beschreibt DE-A-2402734 PUR-Systeme zur Herstellung von Schuhsohlen, in denen Isocyanat-Prepolymere auf Basis von Polyesterolen mit Polyol-Komponenten auf Basis von Polyetherolen umgesetzt werden. Die niedrigste in den Beispielen aufgeführte Formteildichte beträgt 400 g/L. Einen ähnlichen Ansatz verfolgt EP-A-0358328, wobei Isocyanat-Prepolymere verwendet werden, die Umsetzungsprodukte aus MDI und Mischungen aus Polyesterolen und Polyetherolen darstellen.

In EP-A-12119654 werden niederdichte PUR-Schuhsohlen unter Verwendung von speziellen Polyesterolen beschrieben, die durch Umsetzung von aromatische Dicarbonsäuren wie z.B. Terephthalsäure mit Glykolen hergestellt werden.

Ferner offenbart EP-A-1225199 die Herstellung von niederdichten Polyurethanschuhsohlen, wobei als Treibmittel jedoch zwingend Kohlendioxid verwendet wird.

WO 97/32923 offenbart die Herstellung von niederdichten Polyurethanschuhsohlen, wobei wesentlich ist, dass ein spezielles Verhältnis von Zelldurchmesser des Kerns zu Zelldurchmesser der Haut eingehalten wird.

EP-A-358328 beschreibt niederdichte Polyurethanschuhsohlen auf Basis von Hybrid-Prepolymere aus Polyesterolen und Polyetherolen.

EP 1505082 beschreibt Polymerdispersionen, enthaltend mindestens ein Schwefelatome aufweisendes Polyesterpolyol und die Verwendung dieser Dispersion zur Herstellung von Schuhsohlen.

Eine Dichteverringerung der Schuhsohlen führt jedoch zu einer unerwünschten Abnahme der Gebrauchs- und Verarbeitungseigenschaften. Die Abnahme dieser Eigenschaften wird durch den erhöhten Wasseranteil zusätzlich verstärkt. Insbesondere für Sicherheitsschuhe werden aber besondere Anforderungen an die Stabilität der Sohle, gestellt. Eine weitere Besonderheit von Sicherheitsschuhen ist, dass für die Herstellung der Sohlen, insbesondere der Zwischensohlen, im Vergleich zu herkömmlichen Schuhsohlen geometrisch sehr komplizierte Formen verwendet werden, welche die Verankerung von den für diese Schuhe erforderlichen Stahlkappen im Sohlenmaterial erlauben. Daher werden an Reaktionsmischungen besondere Anforderungen bezüglich Fließverhalten gestellt, um ein fehlerfreies Befüllen der Form zu gewährleisten.

Aufgabe der Erfindung war es daher, eine Zwischensohle für Sicherheitsschuhe aus Polyurethanschaumstoff, in die eine Stahlkappe verankert ist, bereitzustellen, wobei die Dichte des Polyurethanschaumstoffs in einem Bereich kleiner als 500 g/L bis ca. 250 g/L liegt und die erfindungsgemäße Zwischensohle sowohl im Kern als auch an der Oberfläche möglichst wenig, bevorzugt keine Defekte aufweisen soll. Ferner soll das dem Schaumstoff zu Grunde liegende Reaktionsgemisch derart beschaffen sein, dass geometrisch komplizierte Schuhformen für Sicherheitsschuhe im wesentlichen ohne Oberflächendefekte mit möglichst kurzer Entformzeit verwirklicht werden können. Die Entformzeit gibt die Zeit an, die das Formteil mindestens in der geschlossenen Form verbleiben muss, ohne dass es zu einer mechanischen Beschädigung des Schaumstoffs beim Entformen kommt.

Die dieser Erfindung zugrunde liegende Aufgabe konnte unerwartet durch die Verwendung einer speziellen Polyolkomponente aus Polyesterolen und Polymer-Polyesterolen sowie bevorzugt zusätzlich einer speziellen Isocyanat-Komponente gelöst werden.

Gegenstand der Erfindung ist daher eine Zwischensohle für Sicherheitsschuhe aus Polyurethanschaumstoff mit einer Dichte von 250 g/L bis weniger als 500 g/L, erhältlich durch Umsetzung von
a) einer Polyisocyanatkomponente mit
b) einer Polyolkomponente, enthaltend die Bestandteile
   b-1) Polyesterole mit einer Viskosität von 150 mPas bis 600 mPas, gemessen nach DIN 53015 bei 75 °C, und
   b-2) Polymerpolyesterole, wobei der Anteil an Polymerpolyesterole (b-2) mehr als 5 bis weniger als 50 Gew.-%, bezogen auf das Gesamtgewicht der Komponente (b) beträgt, und
c) gegebenenfalls Kettenverlängerungsmitteln, in Gegenwart von
d) Treibmittel, enthaltend Wasser und
e) antistatischen Substanzen,
wobei in die Zwischensohle eine Stahlkappe verankert ist.

Als Sicherheitsschuhe sollen im Rahmen der Erfindung alle Schuhe verstanden werden, die die Norm ISO 20344-2004 erfüllen.

Bei den erfindungsgemäßen Polyurethanschaumstoffen, die als Zwischensohlen für Sicherheitsschuhe verwendet werden können, handelt es sich bevorzugt um Integralschaumstoffe, insbesondere um solche gemäß DIN 7726. In einer bevorzugten Ausführungsform betrifft die Erfindung Integralschaumstoffe als Zwischensohlen für Sicherheitsschuhe auf Basis von Polyurethanen mit einer Shore Härte im Bereich von 20-90 A, bevorzugt von 25 bis 60 Shore A, insbesondere 30 bis 55 Shore A, gemessen nach DIN 53505. Weiterhin weisen die erfindungsgemäßen Integralschaumstoffe bevorzugt Zugfestigkeiten von 0,5 bis 10 N/mm², bevorzugt von 1 bis 5 N/mm², gemessen nach DIN 53504 auf. Ferner weisen die erfindungsgemäßen Integralschaumstoffe bevorzugt eine Dehnung von 100 bis 800 %, bevorzugt von 200 bis 500, gemessen nach DIN 53504 auf. Ferner weisen die erfindungsgemäßen Integralschaumstoffe bevorzugt eine Rückprallelastizität nach DIN 53 512 von 20 bis 60 % auf. Schließlich weisen die erfindungsgemäßen Integralschaumstoffe bevorzugt eine Weiterreißfestigkeit von 1 bis 10 N/mm, bevorzugt von 3 bis 5 N/mm, gemessen nach ASTM D3574, auf. Insbesondere handelt es sich bei den erfindungsgemäßen Polyurethanschaumstoffen um elastomere Polyurethan-Weichintegralschaumstoffe.

Die erfindungsgemäßen Polyurethanschaumstoffe weisen ein Dichte von 250 g/L bis weniger als 500 g/L auf. Bevorzugt weisen sie eine Dichte von 300 g/L bis 450 g/L. Unter Dichte des Polyurethanschaumstoffes ist hierbei die gemittelte Dichte über den gesamten Schaumstoff zu verstehen, d.h. bei Integralschaumstoffen bezieht sich diese Angabe auf die mittlere Dichte des gesamten Schaumstoffs inklusive Kern und Außenschicht.

Die zur Herstellung der erfindungsgemäßen Polyurethanschaumstoffe verwendete Polyisocyanatkomponente (a) umfasst die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Toluylendiisocyanat TDI) oder Mischungen daraus.

Bevorzugt wird 4,4'-MDI und/oder HDI verwendet. Das besonders bevorzugt verwendete 4,4'-MDI kann geringe Mengen, bis etwa 10 Gew.-%, allophanat- oder uretoniminmodifizierte Polyisocyanate enthalten. Es können auch geringe Mengen Polyphenylenpolymethylenpolyisocyanat (Roh-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymere eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden. Vorzugsweise wird zur Herstellung der erfindungsgemäßen Prepolymere 4,4'-MDI zusammen mit uretoniminmodifiziertem MDI und Polyestern auf Adipinsäurebasis verwendet. Dabei beträgt der Anteil an modifiziertem MDI an der Gesamtmenge des zur Herstellung des Prepolymers verwendeten MDIs vorzugsweise von 0 bis 25 Gew.-%, besonders bevorzugt von 1 bis 20 Gew.-%. Das Polyol-Polyisocyanat-Verhältnis wird hierbei so gewählt, dass der NCO-Gehalt des Prepolymeren 8 bis 28 Gew.-%, vorzugsweise 14 bis 26 Gew.-%, besonders bevorzugt 16 bis 22 Gew.-% beträgt. Um Nebenreaktionen durch Luftsauerstoff auszuschließen, kann die Umsetzung unter Inertgas, vorzugsweise Stickstoff, durchgeführt werden.

Gegebenenfalls können der Umsetzung zum Polyisocyanatprepolymer auch noch Kettenverlängerungsmittel (a-3) zugegeben werden. Als Kettenverlängerungsmittel für das Prepolymer (a-3) sind zwei- oder dreiwertige Alkohole, bevorzugt verzweigte zwei- oder der dreiwertige Alkohole mit einem Molekulargewicht von weniger als 450 g/mol, besonders bevorzugt weniger als 400 g/mol, geeignet. Bevorzugt verwendet werden Dipropylenglykol und/oder Tripropylenglykol. Ferner sind Addukte von Dipropylenglykol und/oder Tripropylenglykol mit Alkylenoxiden, bevorzugt Propylenoxid, geeignet.

Polyole (a-2) sind dem Fachmann bekannt und beispielsweise beschrieben in "Kunststoffhandbuch, 7, Polyurethane", Carl Hansel Verlag, 3. Auflage 1993, Kapitel 3.1.

Als Polyole (a-2) werden bevorzugt Polyesterole verwendet. Die verwendeten Polyesterole weisen bevorzugt eine OH-Zahl von 20 bis 100, bevorzugt von 30 bis 60 auf. Ferner weisen sie im allgemeinen eine theoretische Funktionalität 1,9 bis 4, bevorzugt von 2 bis 3 auf.

Es ist bevorzugt, dass als Komponente (a-2) die nachstehend unter der Beschreibung der Komponente (b-1) erläuterten Polyesterole eingesetzt werden. Es ist ferner bevorzugt, dass die Komponente (a-2) weniger als 10 Gew.-% Polyetherole, bezogen auf das Gesamtgewicht der Komponente (a-2) enthält. Insbesondere enthält die Komponente (a-2) keine Polyetherole und besteht besonders bevorzugt nur aus Polyesterolen.

In einer besonders bevorzugten Ausführungsform werden als Komponente (a-2) verzweigte Polyesterole verwendet. Die verzweigten Polyesterole weisen bevorzugt eine Funktionalität von mehr als 2 bis 3, insbesondere von 2,2 bis 2,8 auf. Des weiteren weisen die verzweigten Polyesterole bevorzugt ein zahlenmittleres Molekulargewicht von 500 bis 5000 g/mol, besonders bevorzugt von 2000 bis 3000 g/mol auf. Bezüglich der zur Herstellung des verzweigten Polyesters (a-2) verwendeten Einsatzstoffe (Säuren und Alkohole) wird auf die nachfolgenden Ausführungen zur Komponente (b-2) verwiesen.

Die Polyolkomponente (b) enthält Polyesterole (b-1) und Polymerpolyesterole (b-2).

Die verwendeten Polyesterole (b-1) werden im allgemeinen durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Phthalsäure, Isophthalsäure, und/oder Terephthalsäure und Gemischen hiervon hergestellt. Beispiele für geeignete zwei- und mehrwertige Alkohole sind Ethandiol, Diethylenglykol, 1,4-Butandiol, 1,5-Pentandiol, und/oder 1,6-Hexandiol und Gemische hiervon. Besonders bevorzugt werden als Polyesterole (b-1) Adipinsäure und Diethylenglykol verwendet. Das gewichtsgemittelte Molekulargewicht der erfindungsgemäßen Polyesterole (b-1) beträgt vorzugsweise 2500 g/mol und weniger, besonders bevorzugt 2000 g/mol und weniger und insbesondere 1500 g/mol und weniger, ist aber größer als 500 g/mol.

Im allgemeinen weisen die eingesetzten Polyesterole eine mittlere theoretische Funktionalität von 2 bis 4, bevorzugt von 2 bis weniger als 3 und insbesondere von 2 auf. Damit handelt es sich bei den eingesetzten Polyesterolen (b-1) vorzugsweise um lineare Polyesterole. Des weiteren weisen im allgemeinen die eingesetzten Polyesterole eine mittlere OH-Zahl von 20 bis 200, bevorzugt von 30 bis 90 auf.

In einer bevorzugten Ausführungsform weisen die verwendeten Polyesterole (b-1) eine Viskosität von 150 mPas bis 600 mPas, bevorzugt von 200 mPas bis 550 mPas, mehr bevorzugt von 220 mPas bis 500 mPas, besonders bevorzugt von 250 mPas bis 450 mPas und insbesondere von 270 mPas bis 350 mPas, gemessen nach DIN 53 015 bei 75 °C, auf.

Die zweite Bestandteil der Polyolkomponente (b) ist ein Polymerpolyesterol (b-2). Hierbei handelt es sich um ein sogenanntes Polymerpolyol, welches üblicherweise einen Gehalt an, bevorzugt thermoplastischen, Polymeren von 5 bis 50 Gew.-%, bevorzugt 10 bis 45 Gew.-%, besonders bevorzugt 15 bis 25 Gew.-% und insbesondere 18 bis 22 Gew.-%, aufweist. Diese Polymerpolyesterole sind beispielsweise in EP-A-250 351 beschrieben und werden üblicherweise durch radikalische Polymerisation von geeigneten olefinischen Monomeren, beispielsweise Styrol, Acrylnitril, Acrylaten und/oder Acrylamid, in einem als Pfropfgrundlage dienenden Polyesterol hergestellt. Die Seitenketten entstehen im allgemeinen durch Übertragung der Radikale von wachsenden Polymerketten auf Polyesterole. Das Polymer-Polyol enthält neben dem Propfcopolymerisaten überwiegend die Homopolymere der Olefine, dispergiert in unverändertem Polyesterol.

In einer bevorzugten Ausführungsform werden als Monomere Acrylnitril, Styrol, insbesondere ausschließlich Styrol verwendet. Die Monomere werden gegebenenfalls in Gegenwart weiterer Monomerer, eines Makromers, eines Moderators und unter Einsatz eines Radikal-Initiators, meist Azo- oder Peroxidverbindungen, in einem Polyesterol als kontinuierlicher Phase polymerisiert.

Makromere, auch als Stabilisatoren bezeichnet, sind lineare oder verzweigte Polyole mit zahlenmittleren Molekulargewichten von bis zu 2000 g/mol, die mindestens eine endständige, reaktionsfähige olefinische ungesättigte Gruppe enthalten. Die ethylenisch ungesättigte Gruppe kann über Reaktion mit Anhydriden (Maleinsäureanhydrid, Fumarsäure), Acrylat- und Methacrylat-Derivaten sowie Isocyanat-Derivaten, wie 3-Isopropenyl-1,1-dimethylbenzyl-isocyanat und Isocyanato-ethylmethacrylat, mit einem bereits bestehenden Polyol verknüpft werden.

Während der radikalischen Polymerisation werden die Makromere mit in die Copolymerkette eingebaut. Dadurch bilden sich Blockcopolymere mit einem Polyester- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 15 Gew.-%, bezogen auf das Gesamtgewicht der zur Herstellung des Polymerpolyols eingesetzten Monomere.

Es ist erfindungswesentlich, dass der Anteil an Polymerpolyesterole (b-2) mehr als 5 Gew.-%, bezogen auf das Gesamtgewicht der Komponente (b), beträgt. In einer bevorzugten Ausführungsform sind in der Komponente (b) die Bestandteile (b-1) in einer Menge von 30 bis 90 Gew.-%, mehr bevorzugt von 40 bis 85 Gew.-%, besonders bevorzugt von 55 bis 80 Gew.-% und (b-2) in einer Menge von 10 bis 70 Gew.-%, mehr bevorzugt von 15 bis 60 Gew.-% und besonders bevorzugt von 20 bis 45 Gew.-%, bezogen auf das Gesamtgewicht der Komponente (b), enthalten.

Als Komponente (c) werden gegebenenfalls Kettenverlängerungsmittel eingesetzt. Geeignete Kettenverlängerungsmittel sind im Stand der Technik bekannt. Bevorzugt werden 2-funktionelle Alkohole mit Molekulargewichten unter 400 g/mol, insbesondere im Bereich von 60 bis 150 g/mol, verwendet. Beispiele sind Ethylenglykol, 1,3-Propandiol, Diethylenglykol, Butandiol-1,4, Glycerin oder Trimethylolpropan, sowie Gemische davon. Bevorzugt wird Ethylenglykol verwendet.

Das Kettenverlängerungsmittel wird üblicherweise in einer Menge von 1 bis 15 Gew.-%, bevorzugt von 3 bis 12 Gew.-%, besonders bevorzugt von 4 bis 8 Gew.-%, bezogen auf das Gesamtgewicht der Komponenten (b) und (c), verwendet.

Die Umsetzung der Komponenten a) und b) und gegebenenfalls (c) erfolgt üblicherweise in Gegenwart von Treibmitteln (d), enthaltend Wasser (als Bestandteil (d-1) bezeichnet). Als Treibmittel (d) können neben Wasser (d-1) noch zusätzlich allgemein bekannte chemisch oder physikalisch wirkende Verbindungen eingesetzt werden (diese werden als Bestandteil (d-2) bezeichnet). Beispiele für physikalische Treibmittel sind inerte (cyclo)aliphatische Kohlenwasserstoffe mit 4 bis 8 Kohlenstoffatomen, die unter den Bedingungen der Polyurethanbildung verdampfen. Ferner können auch Fluorkohlenwasserstoffe, wie beispielsweise Solkane^{®} 365 mfc, als Treibmittel eingesetzt werden. In einer bevorzugten Ausführungsform wird Wasser als alleiniges Treibmittel eingesetzt.

In einer bevorzugten Ausführungsform wird Wasser (d-1) in einer Menge von 0,1 bis 2 Gew.-%, bevorzugt 0,2 bis 1.5 Gew.-%, besonders bevorzugt 0,3 bis 1.2 Gew.-%, insbesondere 0.4 bis 1 Gew.-%, bezogen auf das Gesamtgewicht der Komponenten (b) und gegebenenfalls (c), eingesetzt.

In einer weiteren bevorzugten Ausführungsform werden der Umsetzung der Komponenten (a), (b) und gegebenenfalls (c) als zusätzliches Treibmittel (d-2) Mikrokugeln, die physikalisches Treibmittel enthalten, zugegeben. Die Mikrokugeln können auch im Gemisch mit den vorstehend genannten zusätzlichen Treibmitteln (d-2) eingesetzt werden.

Die Mikrokugeln (d-2) bestehen üblicherweise aus einer Hülle aus thermoplastischem Polymer und sind im Kern mit einem flüssigen, niedrig siedenden Substanz auf Basis von Alkanen gefüllt. Die Herstellung solcher Mikrokugeln ist beispielsweise in US 3 615 972 beschrieben. Die Mikrokugeln weisen im allgemeinen einen Durchmesser von 5 bis 50 µm auf. Beispiele für geeignete Mikrokugeln sind unter dem Handelsnamen Expancell® der Firma Akzo Nobel erhältlich.

Die Mikrokugeln werden im allgemeinen in einer Menge von 0,5 bis 5 %, bezogen auf das Gesamtgewicht der Komponenten (b), gegebenenfalls (c), und (d) zugesetzt.

Als antistatische Substanzen (e) können alle antistatisch wirkenden Additive verwendet werden. Bevorzugt werden als antistatische Substanzen quaternäre Ammoniumsalze, wie Catafor^{®}, Aceto Corporation, eingesetzt.

Als Katalysatoren (f) für die Herstellung der erfindungsgemäßen Polyurethanschaumstoffe können die üblichen Polyurethanbildungskatalysatoren eingesetzt werden, beispielsweise organische Zinnverbindungen, wie Zinndiacetat, Zinndioctoat, Dibutylzinndilaurat, und/oder tertiäre Amine wie Triethylamin oder vorzugsweise Triethylendiamin, N(3-Aminopropyl)imidazol oder Bis(N,N-Dimethylaminoethyl)ether. Besonders bevorzugt wird als Katalysator f) 1,4-Diaza(2,2,2)bicycloocten, gegebenenfalls zusammen mit anderen Katalysatoren auf Basis von tertiären Aminen eingesetzt.

Die Katalysatoren werden vorzugsweise in einer Menge von 0,01 bis 3 Gew.-%, vorzugsweise 0,05 bis 2 Gew.-%, bezogen auf das Gesamtgewicht der Komponenten (b), gegebenenfalls (c) und (d) eingesetzt.

Weiterhin kann der Umsetzung der Komponenten (a) und (b) Vernetzungsmittel (g) zugegeben werden. Bevorzugt werden Verbindungen mit 3- und mehr gegenüber Isocyanaten reaktiven Gruppen und einem Molekulargewicht im Bereich von 60 bis 250 g/mol, verwendet. Beispiele sind Triethanolamin und/oder Glycerin. Das Vernetzungsmittel wird üblicherweise in einer Menge von 0,01 bis 1 Gew.-%, bevorzugt von 0,1 bis 0,8 Gew.-%, bezogen auf das Gesamtgewicht der Komponenten (b), gegebenenfalls (c) und (d), verwendet.

Die Umsetzung der Komponenten (a) und (b) erfolgt gegebenenfalls in Anwesenheit von (h) Hilfs- und/oder Zusatzstoffen, wie z.B. Zellreglern, Trennmitteln, Pigmenten, oberflächenaktiven Verbindungen und/oder Stabilisatoren gegen oxidativen, thermischen, hydrolytischen oder mikrobiellen Abbau.

Die erfindungsgemäße Zwischensohle erfüllt alle Anforderungen, die nach der Norm ISO 20344-2004 an Zwischensohlen für Sicherheitsschuhe gestellt werden, wie eine gute Haftung mit der Laufsohle und eine geringe Weiterreißfähigkeit, und ist antistatisch.

Gegenstand der Erfindung ist ferner ein Verfahren zur Herstellung von Polyurethanschaumstoffen mit einer Dichte von 250 g/L bis weniger als 500 g/L, durch Umsetzung von
a) einer Polyisocyanatkomponente mit
b) einer Polyolkomponente, enthaltend die Bestandteile
   b-1) Polyesterole und
   b-2) Polymerpolyesterole, wobei der Anteil an Polymerpolyesterole (b-2) mehr als 5 bis weniger als 50 Gew.-%, bezogen auf das Gesamtgewicht der Komponente (b) beträgt, und
c) gegebenenfalls Kettenverlängerungsmitteln, in Gegenwart von
d) Treibmittel, enthaltend Wasser und
e) antistatischen Substanzen,
wobei die Reaktionsmischung in einer Form, enthaltend eine Stahlkappe, geformt wird.

Bei dieser Form kann es sich um eine offene Gießform, in welche die Reaktionsmischung eingegossen und anschließend verpresst wird, oder um eine geschlossene Form, in welche die Reaktionsmischung eingespritzt wird, handeln. Vorzugsweise wird zur Herstellung einer erfindungsgemäßen Zwischensohle eine geschlossene Form verwendet. Beide Verfahren sind dem Fachmann bekannt und sind beispielsweise in "Kunststoffhandbuch, 7, Polyurethane", Carl Hansel Verlag, 3. Auflage 1993, Kapitel 7.2 beschrieben.

Die oben beschriebenen bevorzugten Ausführungsformen für den erfindungsgemäßen Polyurethanintegralschaumstoff beziehen sich ebenso auf das erfindungsgemäße Verfahren.

Zur Herstellung von Polyurethanschaumstoffen werden im allgemeinen die Komponenten (a) und (b) in solchen Mengen zur Umsetzung gebracht, dass das Äquivalenzverhältnis von NCO-Gruppen zur Summe der reaktiven Wasserstoffatome 1:0,8 bis 1:1,25, vorzugsweise 1:0,9 bis 1:1,15 beträgt. Ein Verhältnis von 1:1 entspricht hierbei einem NCO-Index von 100.

Überraschenderweise zeigt die Reaktionsmischung zur Herstellung einer erfindungsgemäßen Zwischensohle sehr gute Fließeigenschaften, wodurch selbst komplizierte Formgeometrien gut gefüllt werden können. Weiter zeigen erfindungsgemäße Reaktionsmischungen ein vorteilhaftes Reaktionsprofil. So bleiben diese bei gleichen Entformzeiten gegenüber im Stand der Technik bekannten Reaktionsmischungen für die Herstellung von Zwischensohlen für Sicherheitsschuhe auf Basis von Polyolen ohne die Verwendung von Graftpolyolen (b-2) länger fließfähig, wodurch die fehlerfreie Befüllung der Form vereinfacht wird. Schließlich ist eine erfindungsgemäß hergestellte Zwischensohle Dimensionsstabil, d.h. sie weist keine Veränderungen der geometrischen Abmessungen nach Entformung auf.

Die Erfindung soll durch nachfolgende Beispiele veranschaulicht werden.

### Beispiele

### Verwendete Einsatzstoffe:

Polyol 1: Polyesterol auf Basis von Adipinsäure und einer Mischung aus Ethylenglykol und 1,4-Butandiol im molaren Verhältnis 2:1, OH-Zahl= 80 mg KOH/g, Viskosität bei 75 °C = 300mPas, gemessen nach DIN 53015
Polyol 2: Polyesterol auf Basis von Adipinsäure und einer Mischung aus Ethylenglykol und 1,4-Butandiol im molaren Verhältnis 2:1, OH-Zahl= 56 mg KOH/g, Viskosität bei 75 °C = 650 mPas
Polyol 3: Hoopol PM245 der Firma Hoocker; Polymerpolyesterol mit einem Feststoffgehalt von 20 %, OH-Zahl = 60 mg KOH/g
Polyol 4: Lupranol 4800 der Firma Elastogran; Polymerpolyetherol mit einem Feststoffgehalt von 45 %, OH-Zahl = 20 mg KOH/g.
KV: Ethylenglykol
Kat 1: Amin-Katalysator
Vernetzer: Triethylendiamin (85 % in Diethanolamin)
Stabilisator: Zellstabilisator auf Basis eines Silikons
Iso 187/2: Isocyanat-Prepolymer der Firma Elastogran auf Basis von 4,4'-MDI, modifizierten Isocyantaten und einem Polyesterol mit einer Funktionalität > 2 und OH-Zahl von 60 mg KOH/g; NCO-Gehalt= 23 %
ESB 260: Isocyanat-Prepolymer auf Basis von 4,4'-MDI, modifizierten Isocyantaten und einem Gemisch von Polyesterolen mit einer mittleren Funktionalität > 2 und einer mittleren OH-Zahl von 60 mg KOH/g; NCO-Gehalt= 23 %

### Herstellung der Integralschaumstoffe:

Die A- und B-Komponenten werden in den in den Beispielen beschriebenen Mischungsverhältnissen bei 23°C intensiv vermischt und die Mischung in ein auf 50°C temperiertes, plattenförmiges Formwerkzeug aus Aluminium mit den Abmessungen 20 x 20 x 1 cm in einer solchen Menge eingebracht, dass nach dem Aufschäumen und Aushärten im geschlossenen Formwerkzeug eine Integralschaumplatte der Dichte 250 g/L resultiert.

**Tabelle 1: Übersicht Zusammensetzung der Beispiele**

| Exp. | 1 | 2 | V1 | V2 |
|---|---|---|---|---|
| A | | | | |
| Polyol 1 | 67.1 | 66.6 | 67.1 | - |
| Polyol 2 | - | - | - | 67.1 |
| Polyol 3 | 20 | 20 | - | 20 |
| Polyol 4 | - | - | 20 | - |
| KV | 6,0 | 5,5 | 6,0 | 6,0 |
| Aminkatalysator | 1,1 | 1,6 | 1,1 | 1,1 |
| Wasser | 0.5 | 0.7 | 0.5 | 0.5 |
| Vernetzer | 0,2 | 0,5 | 0,2 | 0,2 |
| Antistatikum | 5 | 5 | 5 | 5 |
| Stabilisator | 0,1 | 0,1 | 0,1 | 0,1 |

| B | Iso 187/25 | Iso 187/25 | Iso 187/25 | Iso 187/25 |
|---|---|---|---|---|
| NCO-Gehalt | 18.5 | 18.5 | 18.5 | 18.5 |

### Ergebnisse:

1+2: Die erfindungsgemäße Zusammensetzung ergeben feinzellige Formkörper ohne Oberflächendefekte aufgrund von z.B. Einfallstellen. Die Formkörper sind dimensionsstabil, d.h. weisen keine Veränderungen der geometrischen Abmessungen nach Entformung auf.
V1: Die Schäume weisen eine grobe Zellstruktur auf. Die Formkörper haben eine unzureichende Oberfläche.
V2: Die Prüfplatten weisen Oberflächendefekte auf.

## Patentansprüche

1. Zwischensohle für Sicherheitsschuhe aus Polyurethanschaumstoff mit einer Dichte von 250 g/L bis weniger als 500 g/L,
erhältlich durch Umsetzung von
a) einer Polyisocyanatkomponente mit
b) einer Polyolkomponente, enthaltend die Bestandteile
b-1) Polyesterole mit einer Viskosität von 150 mPas bis 600 mPas, gemessen nach DIN 53015 bei 75 °C, und
b-2) Polymerpolyesterole, wobei der Anteil an Polymerpolyesterole (b-2) mehr als 5 Gew.-%, bezogen auf das Gesamtgewicht der Komponente (b) beträgt, und
c) gegebenenfalls Kettenverlängerungsmitteln, in Gegenwart von
d) Treibmittel, enthaltend Wasser, und
e) antistatischen Substanzen,
wobei in der Zwischensohle eine Stahlkappe verankert ist.

2. Zwischensohle nach Anspruch 1, **dadurch gekennzeichnet, dass** die Komponente
(a) Polyisocyanatprepolymere umfasst, die erhältlich sind durch Umsetzung von
(a-1) Polyisocyanaten mit
(a-2) linearen und verzweigten Polyesterolen.

3. Zwischensohle nach Anspruch 1 oder 2, **dadurch gekennzeichnet, dass** die Komponente (b-1) eine Viskosität von 200 mPas bis 500 mPas, gemessen nach DIN 53015 bei 75 °C, aufweist.

4. Zwischensohle nach Anspruch 1 oder 2, **dadurch gekennzeichnet, dass** Wasser als alleiniges Treibmittel eingesetzt wird.

5. Zwischensohle nach einem der Ansprüche 1 bis 4, **dadurch gekennzeichnet, dass** Wasser (d) in einer Menge von 0.1 bis 2 Gew.-%, bezogen auf das Gesamtgewicht der Komponenten (b) und (c), eingesetzt wird.

6. Verfahren zur Herstellung von Zwischensohlen für Sicherheitsschuhe mit einer Dichte von 250 g/l bis weniger als 500 g/l, durch Umsetzung von
a) einer Polyisocyanatkomponente mit
b) einer Polyolkomponente, enthaltend die Bestandteile
b-1) Polyesterole mit einer Viskosität von 150 mPas bis 600 mPas, gemessen nach DIN 53015 bei 75 °C, und
b-2) Polymerpolyesterole, wobei der Anteil an Polymerpolyesterole (b-2) mehr als 5 Gew.-%, bezogen auf das Gesamtgewicht der Komponente (b) beträgt, und
c) gegebenenfalls Kettenverlängerungsmitteln, in Gegenwart von
d) Wasser als Treibmittel und
e) antistatischen Substanzen,
wobei die Reaktionsmischung in einer Form, enthaltend eine Stahlkappe, geformt wird.

## Claims

1. A midsole for safety shoes composed of polyurethane foam whose density is from 250 g/l to less than 500 g/l, obtainable via reaction of
a) a polyisocyanate component with
b) a polyol component, comprising the following constituents:
b-1) polyesterols whose viscosity is from 150 mPas to 600 mPas, measured to DIN 53015 at 75°C, and
b-2) polymer polyesterols, where the proportion of polymer polyesterols (b-2) is more than 5% by weight, based on the total weight of component (b), and
c) if appropriate, chain extenders, in the presence of
d) blowing agent, comprising water, and of
e) antistatic substances,
wherein a steel cap has been anchored in the midsole.

2. The midsole according to claim 1, wherein component
(a) comprises polyisocyanate prepolymers which are obtainable via reaction of
(a-1) polyisocyanates with
(a-2) linear and branched polyesterols.

3. The midsole according to claim 1 or 2, wherein the viscosity of component (b-1) is from 200 mPas to 500 mPas, measured to DIN 53015 at 75°C.

4. The midsole according to claim 1 or 2, wherein the only blowing agent used is water.

5. The midsole according to any of claims 1 to 4, wherein the amount of water (d) used is from 0.1 to 2% by weight, based on the total weight of components (b) and (c) .

6. A process for production of midsoles for safety shoes whose density is from 250 g/l to less than 500 g/l, via reaction of
a) a polyisocyanate component with
b) a polyol component, comprising the following constituents:
b-1) polyesterols whose viscosity is from 150 mPas to 600 mPas, measured to DIN 53015 at 75°C, and
b-2) polymer polyesterols, where the proportion of polymer polyesterols (b-2) is more than 5% by weight, based on the total weight of component (b), and
c) if appropriate, chain extenders, in the presence of
d) water as blowing agent, and
e) antistatic substances,
wherein the reaction mixture is molded in a mold, comprising a steel cap.

## Revendications

1. Semelle intermédiaire pour chaussure de sécurité en mousse de polyuréthane d'une densité de 250 g/l à moins de 500 g/l,
pouvant être obtenue par mise en réaction de
a) un composant polyisocyanate avec
b) un composant polyol, contenant les constituants
b-1) des polyestérols ayant une viscosité de 150 mPas à 600 mPas, mesurée selon DIN 53015 à 75 °C et
b-2) des polyestérols polymères, la proportion de polyestérols polymères (b-2) étant supérieure à 5 % en poids, par rapport au poids total du composant (b), et
c) éventuellement des agents d'allongement de chaînes, en présence de
d) des agents gonflants, contenant de l'eau, et
e) des substances antistatiques,
une coquille en acier étant ancrée dans la semelle intermédiaire.

2. Semelle intermédiaire selon la revendication 1, **caractérisée en ce que** le composant (a) comprend des prépolymères de polyisocyanate, qui peuvent être obtenus par mise en réaction de
(a-1) des polyisocyanates avec
(a-2) des polyestérols linéaires et ramifiés.

3. Semelle de chaussure selon la revendication 1 ou 2, **caractérisée en ce que** le composant (b-1) présente une viscosité de 200 mPas à 500 mPas, mesurée selon DIN 53015 à 75 °C.

4. Semelle de chaussure selon la revendication 1 ou 2, **caractérisée en ce que** de l'eau est utilisée en tant qu'agent gonflant unique.

5. Semelle de chaussure selon l'une quelconque des revendications 1 à 4, **caractérisée en ce que** l'eau (d) est utilisée en une quantité de 0,1 à 2 % en poids, par rapport au poids total des composants (b) et (c).

6. Procédé de fabrication de semelles intermédiaires pour chaussures de sécurité ayant une densité de 250 g/l à moins de 500 g/l, par mise en réaction de
a) un composant polyisocyanate avec
b) un composant polyol, contenant les constituants
b-1) des polyestérols ayant une viscosité de 150 mPas à 600 mPas, mesurée selon DIN 53015 à 75 °C et
b-2) des polyestérols polymères, la proportion de polyestérols polymères (b-2) étant supérieure à 5 % en poids, par rapport au poids total du composant (b), et
c) éventuellement des agents d'allongement de chaînes, en présence de
d) de l'eau en tant qu'agent gonflant, et
e) des substances antistatiques,
le mélange réactionnel étant façonné dans un moule contenant une coquille en acier.
